(19) Europäisches Patentamt
European Patent Office
Office européen des brevets

(11) **EP 0 602 835 B1**

(12) **EUROPEAN PATENT SPECIFICATION**

(45) Date of publication and mention
of the grant of the patent:
**01.05.1996 Bulletin 1996/18**

(51) Int Cl.6: **H02M 3/335**

(21) Application number: **93309631.5**

(22) Date of filing: **02.12.1993**

(54) **Voltage control circuits**

Spannungssteuerschaltungen

Circuits de commande de tension

(84) Designated Contracting States:
**DE FR GB IT**

(30) Priority: **15.12.1992 US 991067**

(43) Date of publication of application:
**22.06.1994 Bulletin 1994/25**

(73) Proprietor: **AT&T Corp.**
**New York, NY 10013-2412 (US)**

(72) Inventor: **Rozman, Allen Frank**
**Richardson, Texas 75082 (US)**

(74) Representative:
**Buckley, Christopher Simon Thirsk et al**
**AT&T (UK) LTD.,**
**AT&T Intellectual Property Division,**
**5 Mornington Road**
**Woodford Green, Essex IG8 0TU (GB)**

(56) References cited:
**EP-A- 0 474 471**

## Description

This invention relates to voltage control circuits.

The copending U.S.A. application of Jacobs et al., Serial No. 07/981,638, corresponding to EP-A-599 554, filed November 25, 1992, describes a DC-DC converter which uses a pair of FET switches, interconnected by a clamp capacitor, to drive a transformer. A pulse width modulator (PWM), which is included in a feedback loop, causes the FET switches to conduct alternately and to switch only when there is a low or possibly zero voltage across the FET switches. The zero-voltage switching results in high efficiency energy conversion, and the use of the external capacitance permits the circuit designer to reduce the rate at which drain-to-source voltages of either FET changes, thereby to reduce the level of conducted or radiated, high-frequency electromagnetic wave interference (EMI) which may be undesirably generated by the circuit The application also discusses how output voltage ripple can be reduced.

Converters using a clamp capacitor to optimize energy transfer in this manner are generally known as "clamped mode" circuits. The copending U.S.A. application of Boylan et al., Serial No. 07/992,274, corresponding to EP-A-602 834, filed December 16, 1992, contains an analysis of the feedback loop of clamped mode circuits and describes how the voltage from the clamp capacitor can be fed to the feedback circuit to avoid circuit instabilities and to permit greater circuit design flexibility.

DC-DC converters are normally used as constant DC voltage power supplies. The desirability of having a DC-DC converter that could provide a number of different voltage outputs to a number of different independent loads has been recognized. There is a continuing need for such a circuit which has the advantages of clamped mode circuits, is of relatively simple construction and therefore relatively inexpensive, and which provides stable voltage levels to a number of independent loads that can be electrically isolated. With electrical isolation, noise, impedance changes, and the like from one load would not affect the power transmitted to another load.

EP-A-474471 is directed to reducing voltage stress at the power switch of a converter with capacitive reset of the transformer core. As such it teaches the use of switching devices in the secondary circuit (saturable reactor, active switching device) to decouple the secondary circuit and provide dead time when the power switch switches to prevent current discharge into the secondary of the transformer. The switch device in the secondary conducts when the voltage of the power switch has reached a zero level.

According to this invention there is provided a voltage control circuit as claimed in claim 1.

An illustrative voltage control circuit embodying the invention, comprises a transformer having at least a first primary winding and at least first and second secondary windings, the winding direction of the second secondary winding being opposite the winding direction of the first secondary winding. An input is coupled to the primary winding, first and second switch devices are each coupled to the primary winding of the transformer, and a clamp capacitor is coupled to the transformer and at least one of the first and second switches. Each of the secondary windings is coupled through a rectifier circuit and an output filter to a separate output. Means comprising a single feedback circuit coupled on one side to one of the output filters and on the other side to control terminals of the first and second switches cause the first and second switches to conduct current alternately.

As will be described below, although the circuit of the invention has only one feedback circuit, both outputs are capable of delivering different constant voltages to different independent loads. The voltage magnitude supplied by each of the outputs depends on the ratio of the number of turns of the first and second secondary windings. As will be appreciated later, not only two, but any number of voltage outputs can be taken from the circuit by providing a corresponding number of secondary windings to the transformer. Regardless of the number of outputs taken, only a single feedback circuit or loop is used, and thus the structure of the DC-DC converter remains relatively uncomplicated. These and other objects, features and advantages of the invention will be better understood from a consideration of the following detailed description taken in conjunction with the accompanying drawing.

## Brief Description of the Drawing

FIG. 1 is a schematic diagram of a DC-DC converter embodying the invention;

FIG. 2 is a schematic diagram illustrating a possible modification of the converter of FIG. 1; and

FIG. 3 is a schematic diagram of a DC-DC converter, for producing a larger number of outputs, embodying the invention.

## Detailed Description

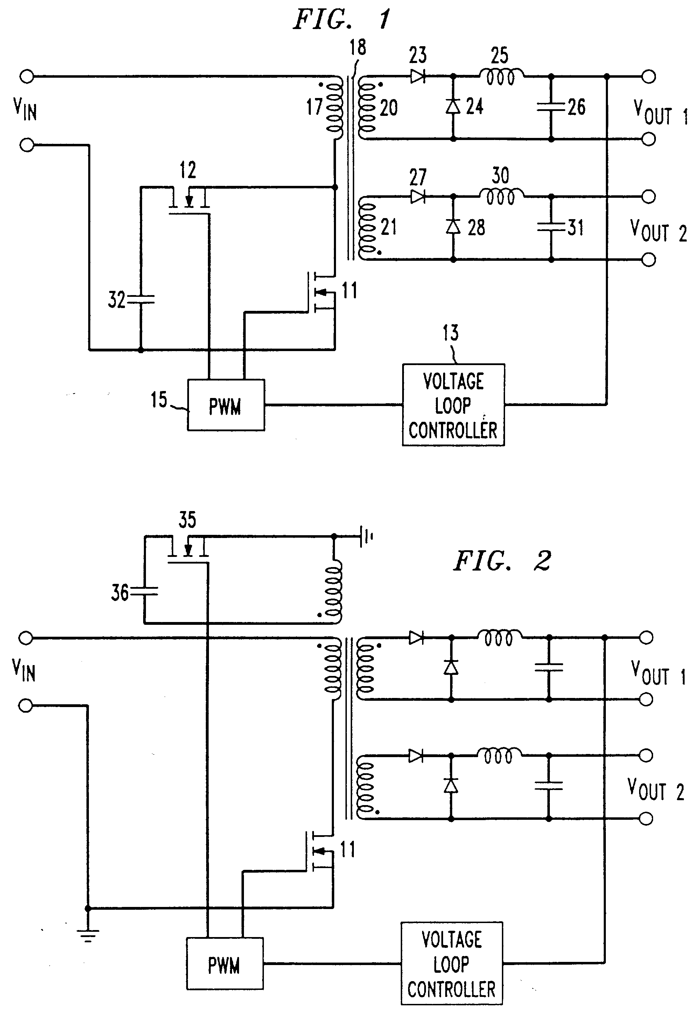

Referring now to FIG. 1, there is shown schematically a DC-DC converter for supplying substantially constant output DC voltages $V_{out1}$ and $V_{out2}$ in response to an input DC voltage $V_{in}$, despite changes in input voltage or changes in the characteristics of the loads to which the outputs may be connected. The circuit operates by alternately conducting current through a first switch 11 and through a second switch 12. The switches are controlled by a feedback circuit including a voltage loop controller 13, and a pulse width modulator (PWM) 15. The voltage applied to control terminals of the switches causes switch 11 to conduct for a fraction of each period of alternation known as the duty cycle D, while the switch 12 conducts for most of the remaining interval of the period (1-D). A brief dead-time may be interposed between the conduction intervals to achieve low or possibly zero-voltage switching, *i.e.*, switching during a time at which there is a zero voltage drop across the switch.

The switches 11 and 12 are typically power FETs and, more specifically, MOSFETs (for Metal Oxide Semiconductor Field Effect Transistor). The control terminals of such devices comprise their gate electrodes. Thus, the gate drive signal applied by PWM 15 to switch 11 is a pulse having a time duration D, while the gate drive signal applied to switch 12 is a pulse having the time interval (1-D) minus the dead-time interval.

The current alternately flowing through the switches 11 and 12 drives the primary winding 17 of a power transformer 18 in such a manner as desirably to avoid saturation of the core of the transformer. The transformer has separate secondary windings 20 and 21 wound in opposite directions as indicated by the dots, which are conventional symbols of winding direction. Secondary winding 20 is coupled through a rectifier circuit comprising rectifying diodes 23 and 24 to an output filter comprising an output inductor 25 and an output capacitor 26; secondary winding 21 is coupled through a rectifying circuit comprising rectifying diodes 27 and 28 to an output filter comprising an output inductor 30 and an output capacitor 31. Separate outputs from the two output filters deliver constant voltages $V_{out1}$ and $V_{out2}$ to separate loads as shown. The two diodes of each rectifier circuit conduct current alternately such that the circuit constitutes a half-wave rectifier circuit. The output of secondary 20 is connected to a feedback circuit comprising a voltage loop controller 13 and the PWM 15. The output voltage $V_{out1}$ drives the voltage loop control to vary the duty cycle at which switches 11 and 12 are switched to provide a controlled voltage output $V_{out1}$ as is usual with circuits of this type.

A clamp capacitor 28, connected in series with switch 12, charges to a steady-state voltage of $V_{in}/(1\text{-}D)$. This clamp capacitor voltage is then connected in series with the primary 17 of the transformer 18 during the (1-D) portion of the switching interval so as to transfer energy stored in the magnetizing inductance of the transformer to the output of the circuit. The application of input voltage $V_{in}$ during the D portion of the switching cycle, along with the capacitor voltage minus $V_{in}$ applied during the (1-D) portion of the cycle, constitutes a means for transferring energy to the outputs during both portions of the switching cycle. Flux balance in the transformer 18 is achieved, and core saturation is avoided, because the average voltage applied to the primary winding 17 over a complete cycle is zero. A more detailed discussion of the circuit of FIG. 1 and its advantages is given in the aforementioned Jacobs et al. application.

As described in the aforementioned Boylan et al. application, the clamp capacitor 28 may be coupled to the PWM 15 to modify the phase and magnitude of energy applied to the switches 11 and 12 to stabilize the circuit and permit optimization of circuit parameters.

The present invention is based on the realization that a single feedback loop can be used to control both output voltages $V_{out1}$ and $V_{out2}$. The two output voltages have relative values that are proportional to the ratio of turns of the two secondary windings 20 and 21, so any of various combinations of output voltages can be produced. The outputs can be electrically isolated so that noise, impedance changes and the like from one load do not affect the power transmitted to the other load. This being true, the circuit of FIG. 1 offers obvious economic advantages over the use of separate converters to provide the two separate voltages $V_{out1}$ and $V_{out2}$, and offers considerable electrical design advantages over a circuit having a single output that is divided between two loads.

The following discussion is intended to demonstrate why two independent voltage-controlled outputs can be generated by a single converter using a single feedback loop. The FIG. 1 circuit is designed to avoid saturation of the core of the transformer by "resetting" the voltages of the transformer after each switching cycle. Thus, as is understood in the art, the product of the voltage across output inductor 25 during the D portion of the cycle and the duration of the D portion of the cycle equals the voltage across the output inductor during the (1-D) portion multiplied by the duration of the (1-D) portion. This is known as "volt-second balance," and the equation for such volt-second balance of the output inductor 25 coupled to secondary 20 is:

$$\left[ V_{in} \cdot \frac{n_{s1}}{n_p} - V_{out1} \right] \cdot D = V_{out1} \cdot (1-D) \qquad (1)$$

where $n_{s1}$ is the number of windings of secondary winding 20.

Solving for $V_{out1}$ yields:

$$V_{out1} = D \cdot V_{in} \cdot \frac{n_{s1}}{n_p} \qquad (2)$$

where $n_p$ is the number of windings of primary winding 17.

The equation for volt-second balance on inductor 30 coupled to winding 21 is:

$$\left[\left[\left[\frac{V_{in}}{(1-D)} - V_{in}\right] \cdot \left[\frac{n_{s2}}{n_p}\right]\right] - V_{out2}\right] \cdot (1-D) = V_{out2} \cdot D \qquad (3)$$

where $n_{s2}$ is the number of windings of secondary winding 21.

Solving for $V_{out2}$ yields:

$$V_{out2} = D \cdot V_{in} \cdot \frac{n_{s2}}{n_p} \qquad (4)$$

Therefore:

$$V_{out1} = V_{out2} \cdot \frac{n_{s1}}{n_{s2}} \qquad (5)$$

Equation 5 demonstrates that the output voltage $V_{out1}$ is equal to the output voltage $V_{out2}$ multiplied by the ratio of turns of secondaries 20 and 21. Thus by adjusting the ratio of turns one can develop whatever relative outputs $V_{out1}$ and $V_{out2}$ may be desired. The clamped mode circuit of FIG. 1 inherently regulates all outputs by applying a proportional volt-second product to each secondary winding over the entire input voltage range. This volt-second product is an average and converted to DC by the output filters. Another characteristic is that the control equation for the winding that transfers power during the (1-D) portion of the switching cycle is that of a "buck-derived" topology rather than a "fly back" topology. It can be shown that this will simplify the design of the feedback control loop and will improve certain performance parameters.

Another embodiment of a clamp mode converter is shown in a FIG. 2. In this configuration, the ground point for FET 35 is chosen so that its gate can be driven in a normal manner, referenced to ground, using a commonly available $n$-channel enhancement-mode FET. This avoids a more complex gate drive circuit referenced to a floating potential. As with FIG. 1, the output voltages is $V_{out1}$ and $V_{out2}$ are proportional to the number of turns on the two transformer secondaries.

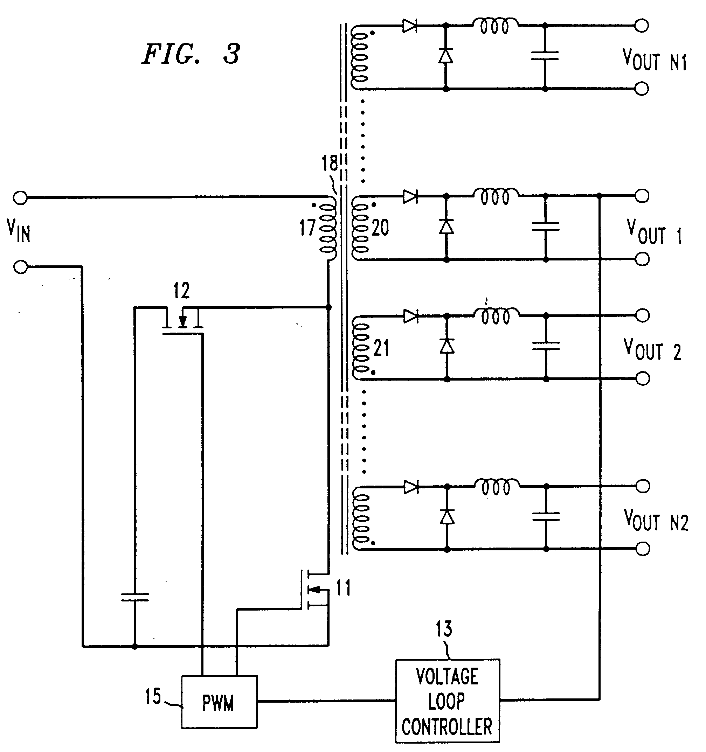

The embodiment of FIG. 3 works in the same manner as that of FIG. 1 and therefore has corresponding reference numerals. Rather than having only two secondary windings, however, the FIG. 3 embodiment has a group of secondary windings that are wound in the same direction as secondary 21 and another group of secondary winding, wound in the same direction as secondary winding 20. Each secondary winding is coupled to an output filter through a half-wave rectifier circuit in the same manner as described before with reference to secondaries 20 and 21. There is no need that the number of windings be balanced or be equal in any way. For example, there may be a number of secondary windings wound in the same direction as secondary 21 and only a single winding wound as secondary 20. The only requirement is that there be at least two secondary windings, driving two outputs, which are wound in opposite directions.

With the feedback taken from the output $V_{out1}$, the voltage of each of the other outputs $V_{outN}$ is defined by:

$$V_{out1} = V_{outN} \frac{n_{s1}}{n_{sN}} \qquad (6)$$

where $n_{s1}$ is the number of turns of secondary winding 20 (corresponding to output $V_{out1}$), and $n_{sN}$ is the number of turns of the secondary winding corresponding to output $V_{outN}$. If the feedback were taken from another output, then the voltage of that output rather than $V_{out1}$, would constitute the voltage reference from which other voltages are computed.

Notice that with a given $V_{out1}$, the only variable is the turns ratio. Thus, output voltage $V_{outN}$ is not dependent on the direction of winding of the corresponding secondary winding. It can be appreciated, then, that the invention offers the opportunity to reduce significantly the cost of equipment for supplying a number of different controlled voltages.

Various known modifications to clamped mode converters are applicable to the circuits of the invention. For example, a current loop controller can be added to the feedback circuit, as is known in the art. Full-wave rectifiers utilizing tapped or non-tapped windings could be used in place of the half-wave rectifiers, as is also known. Various other embodiments and modifications may be made by those skilled in the art.

## Claims

1. A voltage control circuit comprising:

   a transformer (18) having at least a first primary winding (17) and at least first (20) and second (21) secondary windings;

an input coupled to said primary winding;

first and second switching devices (11,12) each coupled to said primary winding of said transformer;

a clamp capacitor (28) coupled to said transformer and to at least one of said first and second switches;

first (23,24) and second (27,28) means for rectifying current of the first and second secondary windings, respectively;

first (25,26) and second (30,31) output filters coupled, respectively to said first and second secondary windings of said transformer;

first and second outputs coupled, respectively, to said first and second output filters; and

means comprising a single feed back circuit coupled on one side to one of said output filters and on another side to control terminals of said first and second switches to conduct current alternately;

CHARACTERIZED IN THAT:

the winding direction of the first secondary winding is the opposite of the winding direction of the second secondary winding relatively to the direction of the means for rectifying current of said respective first and second secondary windings.

2. A voltage control circuit as claimed in claim 1 wherein:

said input is adapted to accept DC input energy;

and each of said outputs is adapted to deliver to appropriate loads DC output energy of predetermined voltage, whereby said voltage control circuit constitutes a DC-DC converter.

3. A voltage control circuit as claimed in claim 2 wherein:

the output voltage of the first output is equal to the output voltage of the second output multiplied by the ratio of the number of turns of the first secondary winding to the number of turns of the second secondary winding.

4. A voltage control circuit as claimed in claim 3 wherein:

said feedback circuit comprises a voltage loop controller coupled to an output filter and a pulse width modulator, the pulse width modulator being coupled to said control terminals of said switches.

5. A voltage control circuit as claimed in claim 4 wherein:

the first rectifying means comprises alternately conducting first and second rectifying diodes coupled to the first output filter;

and the second rectifying means comprises alternately conducting third and fourth rectifying diodes coupled to the second output filter.

6. A voltage control circuit as claimed in claim I wherein:

said transformer has a plurality of other secondary windings in addition to the first and second secondary windings; and

each of the other secondary windings is coupled to another rectifier circuit, another output filter and other output terminals.

7. A voltage control circuit as claimed in claim 6 wherein:

each of the plurality of secondary windings drives a separate load coupled to the output terminals associated therewith, each of the loads being driven independently of other loads.

8. A voltage control circuit as claimed in claim 6 wherein:

the winding direction of a first plurality of secondary windings is the opposite of the winding direction of a second plurality of secondary windings relatively to the direction of means for rectifying current associated with each of the first and second plurality of secondary windings.

9. A voltage control circuit as claimed in claim 8 wherein:

the single feedback circuit is coupled to the first output filter;

the output voltage of the first output terminals is $V_{out1}$;

and the voltage $V_{outN}$ of any of the other output terminals is determined by the relation:

$$V_{out1} = V_{outN} \frac{n_{s1}}{n_{sN}}$$

where $n_{s1}$ is the number of windings of the first secondary winding and $n_{sN}$ is the number of windings of the secondary winding corresponding to the output terminals having the voltage $V_{outN}$.

**Patentansprüche**

1. Spannungsregelschaltung mit:
einem Transformator (18) mit mindestens einer ersten Primärwicklung (17) und mindestens ersten (20) und zweiten (21) Sekundärwicklungen;

einem an die besagte Primärwicklung angekoppelten Eingang;
ersten und zweiten Schaltvorrichtungen (11,12), die jeweils an besagte Primärwicklung des besagten Transformators angekoppelt sind;
einem an den besagten Transformator und an mindestens einen der besagten ersten und zweiten Schalter angekoppelten Klemmkondensator (28);
ersten (23,24) und zweiten (27,28) Mitteln zum Gleichrichten von Strom der ersten bzw. zweiten Sekundärwicklungen;
ersten (25,26) und zweiten (30,31) Ausgangsfiltern, die an besagte erste bzw. zweite Sekundärwicklungen des besagten Transformators angekoppelt sind;
ersten und zweiten Ausgängen, die an besagte erste bzw. zweite Ausgangsfilter angekoppelt sind; und
Mitteln mit einer einzelnen Rückkopplungsschaltung, die an einem Ende an einen der besagten Ausgangsfilter und an einem anderen Ende an Steueranschlüsse der besagten ersten und zweiten Schalter angekoppelt ist, um wechselweise Strom zu leiten;
dadurch gekennzeichnet, daß die Wicklungsrichtung der ersten Sekundärwicklung der Wicklungsrichtung der zweiten Sekundärwicklung relativ zur Richtung der Mittel zum Gleichrichten von Strom der besagten ersten bzw. zweiten Sekundärwicklungen entgegengesetzt ist.

2. Spannungsregelschaltung nach Anspruch 1, wobei der besagte Eingang zur Annahme von Gleichstrom-Eingangsenergie geeignet ist und jeder der besagten Ausgänge zum Abliefern von Gleichstrom-Ausgangsenergie mit einer vorbestimmten Spannung an entsprechende Last geeignet ist, wodurch die besagte Spannungsregelschaltung einen Gleichspannungswandler bildet.

3. Spannungsregelschaltung nach Anspruch 2, wobei die Ausgangsspannung des ersten Ausgangs gleich der Ausgangsspannung des zweiten Ausgangs multipliziert mit dem Verhältnis der Anzahl von Windungen der ersten Sekundärwicklung zur Anzahl von Windungen der zweiten Sekundärwicklung ist.

4. Spannungsregelschaltung nach Anspruch 3, wobei die besagte Rückkopplungsschaltung einen an ein Ausgangsfilter und einen Impulsbreitenmodulator angekoppelten Spannungsschlaufenregler umfaßt, wobei der Impulsbreitenmodulator an besagte Steueranschlüsse der besagten Schalter angekoppelt ist.

5. Spannungsregelschaltung nach Anspruch 4, wobei das erste Gleichrichtmittel an das erste Ausgangsfilter angekoppelte, wechselweise leitende erste und zweite Gleichrichtdioden umfaßt und das zweite Gleichrichtmittel an das zweite Ausgangsfilter angekoppelte, wechselweise leitende dritte und vierte Gleichrichtdioden umfaßt.

6. Spannungsregelschaltung nach Anspruch 1, wobei der besagte Transformator zusätzlich zu den ersten und zweiten Sekundärwicklungen eine Mehrzahl weiterer Sekundärwicklungen aufweist und jede der weiteren Sekundärwicklungen an eine weitere Gleichrichterschaltung, ein weiteres Ausgangsfilter und weitere Ausgangsanschlüsse angekoppelt ist.

7. Spannungsregelschaltung nach Anspruch 6, wobei jede der Mehrzahl von Sekundärwicklungen eine getrennte, an die damit verbundenen Ausgangsanschlüsse angekoppelte Last antreibt, wobei jede der Lasten unabhängig von anderen Lasten angetrieben wird.

8. Spannungsregelschaltung nach Anspruch 6, wobei die Wicklungsrichtung einer ersten Mehrzahl von Sekundärwicklungen der Wicklungsrichtung einer zweiten Mehrzahl von Sekundärwicklungen relativ zur Richtung von mit jeder der ersten und zweiten Mehrzahl von Sekundärwicklungen verbundenen Mitteln zum Gleichrichten von Strom entgegengesetzt ist.

**9.** Spannungsregelschaltung nach Anspruch 8, wobei die einzelne Rückkopplungsschaltung an das erste Ausgangsfilter angekoppelt ist; die Ausgangsspannung der ersten Ausgangsanschlüsse $V_{out1}$ ist; und die Spannung $V_{outN}$ eines beliebigen der anderen Ausgangsanschlüsse durch folgendes Verhältnis bestimmt wird:

$$V_{out1} = V_{outN} \frac{n_{s1}}{n_{sN}}$$

wobei $n_{s1}$ die Anzahl von Windungen der ersten Sekundärwicklung ist und $n_{sN}$ die Anzahl von Windungen der Sekundärwicklung ist, die den Ausgangsanschlüssen mit der Spannung $V_{outN}$ entspricht.

**Revendications**

1. Circuit de commande de tension comprenant:

   un transformateur (18) ayant au moins un premier enroulement primaire (17) et au moins des premier (20) et deuxième (21) enroulements secondaires;
   une entrée couplée audit premier enroulement primaire;
   des premier et deuxième dispositifs de commutation (11,12) couplés chacun audit enroulement primaire dudit transformateur;
   un condensateur de maintien de niveau (28) couplé audit transformateur et à au moins un desdits premier et deuxième commutateurs;
   des premier (23,24) et deuxième (27,28) moyens pour redresser le courant des premier et deuxième enroulements secondaires, respectivement;
   des premier (25,26) et deuxième (30,31) filtres de sortie couplés, respectivement, auxdits premier et deuxième enroulements secondaires dudit transformateur;
   des premier et deuxième sorties couplées, respectivement, auxdits premier et deuxième filtres de sortie; et
   un moyen comprenant un circuit de contre-réaction unique couplé d'un côté à l'un desdits filtres de sortie et de l'autre côté à des bornes de commande desdits premier et deuxième commutateurs pour conduire le courant alternativement;
   CARACTERISE EN CE QUE:
   le sens d'enroulement du premier enroulement secondaire est l'opposé du sens d'enroulement du deuxième enroulement secondaire relativement au sens du moyen pour redresser le courant desdits premier et deuxième enroulements secondaires respectifs.

2. Circuit de commande de tension selon la revendication 1, dans lequel:

   ladite entrée est adaptée pour accepter une énergie d'entrée de courant continu;
   et chacune des sorties est adaptée pour fournir à des charges appropriées une énergie de sortie de courant continu de tension prédéterminée, de telle sorte que ledit circuit de commande de tension constitue un convertisseur continu-continu.

3. Circuit de commande de tension selon la revendication 2, dans lequel:
   la tension de sortie de la première sortie est égale à la tension de sortie de la deuxième sortie multipliée par le rapport du nombre de spires du premier enroulement secondaire sur le nombre de spires du deuxième enroulement secondaire.

4. Circuit de commande de tension selon la revendication 3, dans lequel:
   ledit circuit de contre-réaction comprend un régulateur à boucle de tension couplé à un filtre de sortie et un modulateur de largeur d'impulsion, le modulateur de largeur d'impulsion étant couplé auxdites bornes de commande desdits commutateurs.

5. Circuit de commande de tension selon la revendication 4, dans lequel:

   le premier moyen de redressement comprend des première et deuxième diodes de redressement conduisant alternativement couplées au premier filtre de sortie;

et le deuxième moyen de redressement comprend des troisième et quatrième diodes de redressement conduisant alternativement couplées au deuxième filtre de sortie.

6. Circuit de commande de tension selon la revendication 1, dans lequel:

ledit transformateur a une pluralité d'autres enroulements secondaires en plus des premier et deuxième enroulements secondaires; et
chacun des autres enroulements secondaires est couplé à un autre circuit redresseur, un autre filtre de sortie et d'autres bornes de sortie.

7. Circuit de commande de tension selon la revendication 6, dans lequel:
chacun de la pluralité d'enroulements secondaires pilote une charge séparée couplée aux bornes de sortie qui lui sont associées, chacune des charges étant pilotée indépendamment des autres charges.

8. Circuit de commande de tension selon la revendication 6, dans lequel:
le sens d'enroulement d'une première pluralité d'enroulements secondaires est l'opposé du sens d'enroulement d'une deuxième pluralité d'enroulements secondaires relativement au sens du moyen pour redresser le courant associé à chacune des première et deuxième pluralités d'enroulements secondaires.

9. Circuit de commande de tension selon la revendication 8, dans lequel:

le circuit de contre-réaction unique est couplé au premier filtre de sortie;
la tension de sortie des premières bornes de sortie est $V_{sort1}$;
et la tension $V_{sortN}$ de l'une quelconque des autres bornes de sortie est déterminée par la relation:

$$V_{sort1} = V_{sortN} \frac{n_{s1}}{n_{sN}}$$

où $n_{s1}$ est le nombre de spires du premier enroulement secondaire et $n_{SN}$ est le nombre de spires de l'enroulement secondaire correspondant aux bornes de sortie ayant la tension $V_{sortN}$.

*FIG. 1*

*FIG. 2*

*FIG. 3*